# EUROPÄISCHE PATENTSCHRIFT

(11) **EP 3 990 223 B1**
(45) Veröffentlichungstag und Bekanntmachung des Hinweises auf die Patenterteilung: **02.08.2023**
(21) Anmeldenummer: 20732605.9
(22) Anmeldetag: 17.06.2020
(51) Int. Cl.: B25B 23/145, B25B 23/147, B25F 5/00

(54) **VERFAHREN ZUM BETREIBEN EINER WERKZEUGMASCHINE UND WERKZEUGMASCHINE**
MACHINE TOOL AND METHOD FOR OPERATING A MACHINE TOOL
PROCÉDÉ DE FONCTIONNEMENT D'UNE MACHINE-OUTIL ET MACHINE-OUTIL

(30) Priorität: 27.06.2019 EP 19182851
(43) Veröffentlichungstag der Anmeldung: 04.05.2022
(73) Patentinhaber: Hilti Aktiengesellschaft, 9494 Schaan (LI)
(72) Erfinder: LIU, Qin, 85764 Oberschleißheim (DE); GILLMEIER, Bernd, 86899 Landsberg (DE); SCHMID, Stefan, 86929 Untermühlhausen (DE)
(74) Vertreter: Hilti Aktiengesellschaft Corporate Intellectual Property
(86) Internationale Anmeldenummer: PCT/EP2020/066743
(87) Internationale Veröffentlichungsnummer: WO 2020/260088

(56) Entgegenhaltungen:
- EP-A1- 3 170 624
- EP-A2- 2 338 646
- WO-A1-2011/122695
- DE-A1-102010 003 977
- US-A1- 2006 081 386

## Beschreibung

Die vorliegende Erfindung betrifft ein Verfahren zum Betrieben einer Werkzeugmaschine mit einem Akku und einem Elektromotor gemäß dem Oberbegriff des Patentanspruches 1. Weiterhin betrifft die vorliegende Erfindung eine Werkzeugmaschine gemäß dem Oberbegriff des Patentanspruchs 15. Ein derartiges Verfahren und eine derartige Werkzeugmaschine gehen beispielsweise aus der EP 3 170 624 A1 hervor.

Bei aus der Praxis bekannten Werkzeugmaschinen, die mit einem von einem Akku betreibbaren regulierten Elektromotor ausgeführt sind, steigt beispielsweise beim Bohren eines Loches mit zunehmender Bohrtiefe ein an einer Abtriebswelle anliegendes Ausgangsdrehmoments und somit ein zur Bereitstellung dieses Ausgangsdrehmoments erforderlicher Motorstrom an, um das entsprechend ansteigende Ausgangsdrehmoment bereitzustellen und eine gewünschte Drehgeschwindigkeit eines Rotors des Elektromotors aufrechtzuerhalten. Wenn ein an der Ausgangswelle anliegendes Bremsmoment eine Leistungsfähigkeit des Elektromotors übersteigt, stoppt der Rotor auch bei ansteigendem Motorstrom. Der blockierte Rotor und die hohe anliegende Stromstärke können zu einer Beschädigung der Elektronik und/oder des Elektromotors führen, wenn kein Hardware- oder Softwareschutz vorliegt. Ebenso kann es vorgesehen sein, dass eine Ausgangswelle beispielsweise bei einem Bohren in einem harten Untergrund schlagartig blockiert. Hierdurch steigt eine anliegende Stromstärke schlagartig an.

Um eine Beschädigung der Werkzeugmaschine in diesen Fällen zu verhindern, ist es bekannt, mechanische Kupplungen vorzusehen, die die Abtriebswelle bei einem definierten, an der Abtriebswelle anliegenden Ausgangsdrehmoment von dem Elektromotor entkoppeln, so dass der Rotor des Elektromotors weiter rotieren kann, ohne, dass das an der Ausgangswelle anliegende Drehmoment auf den Elektromotor übertragen wird.

Allerdings ist eine mechanische Kupplung durch ein hohes Gewicht gekennzeichnet, benötigt selbst einen Bauraum und beeinflusst die Herstellkosten der Werkzeugmaschine negativ. Zudem unterliegen die mechanischen Bauteile dem Verschleiß und müssen gegebenenfalls gewartet oder ausgetauscht werden. Durch einen Verschleiß der mechanischen Kupplung kann sich nachteilhafterweise ein Auslösedrehmoment der Kupplung verändern, so dass ein maximal mögliches Auslösedrehmoment der Kupplung im Laufe des Betriebs der Kupplung abnehmen kann. Weiterhin kann es auch vorkommen, dass die mechanische Kupplung nicht in gewünschtem Umfang arbeitet.

Um diese Nachteile zu beheben sind aus der Praxis Werkzeugmaschinen mit einer elektronisch implementierten Kupplung bekannt, die durch eine entsprechende Ansteuerung des Elektromotors umgesetzt ist, wobei hierzu beispielsweise Signale des Elektromotors ermittelt und ausgewertet werden. Der Elektromotor wird nach Detektion eines Auslösefalls, beispielsweise einem an der Ausgangswelle anliegenden Drehmoments, welches einen definierten Grenzwert überschreitet oder einer schlagartigen Abbremsung der Antriebswelle größer einem definierten Grenzwert oder einer an der Ausgangswelle anliegenden Drehzahl, welche beim Anlauf wegen des blockierenden Werkzeugs in einem definierten Zeitintervall einen minimalen Grenzwert nicht erreicht, von einem ersten Betriebsmodus in einen zweiten Betriebsmodus überführt, in dem der Elektromotor mit Strompulsen beaufschlagt wird. Diese Strompulse geben dem Nutzer ein haptisches Feedback, das demjenigen einer Werkzeugmaschine mit einer mechanischen Kupplung nachempfunden ist und vorzugsweise gleicht. Zudem wird durch die diskontinuierlichen Strompulse ein Lösen eines blockierten, mit der Ausgangswelle gekoppelten Werkzeugs in dem Untergrund unterstützt. Wenn die Ausgangswelle wieder frei ist übersteigt das Motordrehmoment das an der Ausgangswelle anliegende Bremsmoment, die Drehgeschwindigkeit des Rotors des Elektromotors steigt und der Elektromotor wird wieder in den ersten Betriebszustand überführt.

Das Betreiben des Elektromotors in dem zweiten Betriebszustand ist nachteilhafterweise sehr stromintensiv und führt zu einer schnellen Abnahme des Ladestandes des Akkus, wobei es hierdurch gegebenenfalls nicht möglich ist eine gewünscht hohe Spannung konstant aufrechtzuerhalten.

Es ist Aufgabe der vorliegenden Erfindung, ein Verfahren zum Betreiben einer Werkzeugmaschine und eine Werkzeugmaschine bereitzustellen, wobei die Werkzeugmaschine in dem zweiten Betriebszustand über einen vorteilhaft langen Zeitraum mit einer gewünscht hohen Spannung betreibbar ist.

Die Aufgabe wird mit einem Verfahren zum Betreiben einer Werkzeugmaschine gemäß des Patentanspruches 1 gelöst.

Es wird somit ein Verfahren zum Betreiben einer Werkzeugmaschine mit einem Akku und einem Elektromotor, der zum rotatorischen Antrieb einer mit einem Werkzeug koppelbaren Abtriebswelle ausgeführt ist, vorgeschlagen, wobei eine Steuereinrichtung zur Betätigung des Elektromotors und eine Einrichtung zur Ermittlung eines Parameters vorgesehen ist, wobei die Werkzeugmaschine in einem ersten Betriebsmodus und einem zweiten Betriebsmodus betreibbar ist, und wobei die Steuereinrichtung die Werkzeugmaschine von dem ersten Betriebsmodus in den zweiten Betriebsmodus überführt, wenn der von der Einrichtung ermittelte Parameter einen definierten Schwellwert überschreitet oder unterschreitet.

Erfindungsgemäß ist vorgesehen, dass die Steuereinrichtung den Elektromotor in dem zweiten Betriebsmodus mit einem Strompulse umfassenden Stromstärkeprofil ansteuert, wobei eine maximale Höhe der Strompulse von der Steuereinrichtung in Abhängigkeit eines aktuellen Ladestatus des Akkus variiert wird.

Eine mit einem erfindungsgemäßen Verfahren betriebene Werkzeugmaschine gibt einem Nutzer beispielsweise im Fall eines Blockierens der Antriebswelle auch ohne das Vorsehen einer mechanischen Kupplung auf einfache Weise eine haptische Rückmeldung vergleichbar einer Werkzeugmaschine mit einer mechanischen Kupplung. Zudem kann eine mit einem erfindungsgemäßen Verfahren betriebene Werkzeugmaschine im Vergleich zu einer Werkzeugmaschine, die in dem zweiten Betriebsmodus mit jeweils identischen und zum Lösen der Abtriebswelle mit hohen Strompulsen beaufschlagt wird, durch das Vorsehen der verschiedenen Strompulse mit unterschiedlichen maximalen Stromstärken vorteilhaft lange in dem zweiten Betriebsmodus betrieben werden. Wenn die Werkzeugmaschine zur Bearbeitung eines harten Materials vorgesehen ist, kann das mit der Abtriebswelle gekoppelte Werkzeug, beispielsweise ein Bit, ein Schrauber, ein Bohrer oder dergleichen, abrupt stehenbleiben. Bei Verwendung der Werkzeugmaschine zur Bearbeitung eines weichen aber auch eines harten Materials steigt beispielsweise mit einem Bohrfortschritt ein an der Abtriebswelle anliegendes Drehmoment an, bis dies ein zulässiges Grenzdrehmoment erreicht. Weiterhin kann es auch vorgesehen sein, dass die Abtriebswelle bei einem Anlauf eine definierte Mindestdrehzahl in einem vorgegebenen Zeitintervall nicht erreicht und daher beispielsweise ein bereits zu Beginn eines Bearbeitungsvorgangs detektierter Bohrer detektiert wird. In diesen Fällen wird die Werkzeugmaschine von dem ersten Betriebsmodus in den zweiten Betriebsmodus überführt.

Das energieeffiziente Betreiben der Werkzeugmaschine in dem zweiten Betriebszustand wird dadurch erreicht, dass eine maximale Höhe der Strompulse in Abhängigkeit des aktuellen Ladestatus des Akkus angepasst wird, so dass bei abnehmenden Ladezustand auch der Stromverbrauch reduziert wird und die Werkzeugmaschine somit vorteilhaft lange in dem zweiten Betriebsmodus betreibbar ist. Weiterhin kann durch das erfindungsgemäße Verfahren auf einfache Weise sichergestellt werden, dass eine Spannung im Verlauf des Betreibens der Werkzeugmaschine in dem zweiten Betriebsmodus sicher oberhalb eines definierten Grenzwerts liegt.

Bei einer vorteilhaften Ausführungsform eines Verfahrens nach der Erfindung ist vorgesehen, dass eine maximale Höhe von Strompulsen, mit denen der Elektromotor in dem zweiten Betriebsmodus beaufschlagt wird, im zeitlichen Ablauf nicht zunimmt und insbesondere abnimmt.

Es kann dabei vorgesehen sein, dass die maximale Höhe des ersten Strompulses und/oder die maximale Höhe des zweiten Strompulses diskret, d. h., beispielsweise stufenförmig, oder insbesondere bei einer kontinuierlichen Überwachung des Ladestatus des Akkus kontinuierlich in Abhängigkeit des Ladestatus des Akkus angepasst wird.

Bei einer besonders vorteilhaften Ausführungsform eines Verfahrens nach der Erfindung ist vorgesehen, dass der Elektromotor in dem zweiten Betriebsmodus mit ersten Strompulsen und zweiten Strompulsen beaufschlagt wird, wobei die Höhe einer maximalen Stromstärke der ersten Strompulse größer als die Höhe einer maximalen Stromstärke der zweiten Strompulse ist. Durch das Vorsehen der ersten und zweiten Strompulse mit unterschiedlichen maximalen Stromstärken ist die Werkzeugmaschine in dem zweiten Betriebsmodus besonders energieeffizient betreibbar, wobei die ersten Strompulse mit der größeren maximalen Stromstärke vorgesehen sind, um die Abtriebswelle bzw. ein mit der Abtriebswelle gekoppeltes Werkzeug aus dem jeweiligen Untergrund zu lösen. Die zweiten Strompulse mit der kleineren maximalen Stromstärke sind dagegen vorgesehen, um dem Nutzer in dem zweiten Betriebsmodus der Werkzeugmaschine eine vergleichbare haptische Rückmeldung zu einer mit einer mechanischen Kupplung ausgeführten Werkzeugmaschine in ausgelöstem Zustand der Kupplung zu vermitteln. Es wurde festgestellt, dass hierfür geringere maximale Stromstärken ausreichen. Eine Abfolge von ersten Strompulsen und zweiten Strompulsen erfolgt dabei insbesondere anhand eines vorgegebenen Musters.

Es kann vorgesehen sein, dass eine Höhe der maximalen Stromstärke der ersten Strompulse und/oder eine Höhe der maximalen Stromstärke der zweiten Strompulse in Abhängigkeit des Ladezustand des Akkus angepasst werden und insbesondere im zeitlichen Ablauf abnehmen.

Bei einer vorteilhaften Ausführungsform eines Verfahrens nach der Erfindung wird der Elektromotor in dem zweiten Betriebsmodus abwechselnd mit einer definierten Anzahl erster Strompulse und einer definierten Anzahl zweiter Strompulse angesteuert, wobei sich diese Abfolge insbesondere wiederholt. Durch den definierten Ablauf wird auf einfache Weise einerseits eine gewünschte haptische Rückmeldung und andererseits ein gewünschtes, auf die Abtriebswelle übertragenes Drehmoments in energieeffizienter Weise erzielt, das beispielsweise zum Lösen eines in einem Untergrund blockierenden Bits vorgesehen ist.

Als besonders vorteilhaft einerseits hinsichtlich der haptischen Rückmeldung und andererseits hinsichtlich des Stromverbrauchs hat es sich erwiesen, wenn der Elektromotor in dem zweiten Betriebsmodus abwechselnd mit einem ersten Strompuls und anschließend mehreren, insbesondere zwei bis zwanzig, vorzugsweise fünf bis 14, vorzugsweise acht bis zehn, insbesondere neun, zweiten Strompulsen angesteuert wird.

Um in dem zweiten Betriebsmodus ein gewünscht großes Drehmoment auf die Abtriebswelle übertragen zu können und gleichzeitig einen geringen Stromverbrauch zu erzielen,, hat es sich als vorteilhaft herausgestellt, wenn der Elektromotor in dem zweiten Betriebsmodus derart angesteuert wird, dass eine Länge der ersten Strompulse sich von einer Länge der zweiten Strompulse unterscheidet, wobei die ersten Strompulse insbesondere länger als die zweiten Strompulse sind, und vorzugsweise im Wesentlichen doppelt so lange wie die zweiten Strompulse sind. Dem liegt die Erkenntnis zugrunde, dass zur Erzielung einer gewünschten haptischen Rückmeldung im Vergleich zu dem ersten Strompuls kurze zweite Strompulse ausreichen, wohingegen zum Lösen des Werkzeugs längere Strompulse nützlich sind.

Es kann vorgesehen sein, dass ein zeitlicher Abstand zwischen aufeinanderfolgenden Strompulsen insbesondere einer Länge des ersten Strompulses entspricht. Es kann vorgesehen sein, dass ein Abstand zwischen sämtlichen Strompulsen im Wesentlichen identisch ist.

Als besonders energieeffizient hat es sich erwiesen, wenn der Elektromotor in dem zweiten Betriebsmodus derart angesteuert wird, dass die maximale Stromstärke der ersten Strompulse zwischen 25 % und 80 % größer, besonders bevorzugt im Wesentlichen 50 % größer als die maximale Stromstärke der zweiten Strompulse ist. Das Verhältnis der maximalen Stromstärke der ersten Strompulse zur maximalen Stromstärke der zweiten Strompulse kann sich im Verlauf auch ändern.

Wenn ein Übergang der Werkzeugmaschine von dem ersten Betriebsmodus in den zweiten Betriebsmodus vorgesehen ist, hat es sich als vorteilhaft herausgestellt, wenn der Elektromotor ausgehend von einem ersten Betriebsmodus der Werkzeugmaschine vor einem Übergang in den zweiten Betriebsmodus für eine definierte Zeitspanne mit einer Stromstärke im Wesentlichen gleich dem Wert Null beaufschlagt wird und der Elektromotor insbesondere gestoppt wird.

Um beispielsweise einen Bohrvorgang nach Lösen eines Bohrers aus dem Untergrund fortsetzen zu können, wird die Werkzeugmaschine bei einer vorteilhaften Ausführungsform eines Verfahrens nach der Erfindung von dem zweiten Betriebsmodus in den ersten Betriebsmodus überführt, wenn ein von der Einrichtung ermitteltes, an der Abtriebswelle anliegendes Drehmoment kleiner als ein Grenzdrehmoment wird. Hierbei kann es vorgesehen sein, dass der Elektromotor über eine beispielsweise vorgegebene Rampe auf eine gewünschte Drehzahl beschleunigt wird.

Um den Elektromotor vor einer Beschädigung zu schützen, kann der Elektromotor gestoppt werden, wenn sich der Elektromotor über einen Zeitraum größer einem vordefinierten Grenzwert in dem zweiten Betriebsmodus befindet. Die Werkzeugmaschine wird hierdurch insbesondere vor einer Beschädigung durch Überhitzung von Komponenten der Werkzeugmaschine, insbesondere einer Elektronik, eines Rotors oder von Windungen des Elektromotors geschützt.

Bei einer vorteilhaften Ausführungsform der Erfindung ist die Einrichtung zur Ermittlung eines an der Abtriebswelle anliegenden Drehmoments ausgeführt, wobei die Werkzeugmaschine in dem ersten Betriebsmodus betrieben wird, wenn das von der Einrichtung ermittelte Drehmoment kleiner als ein definiertes Grenzdrehmoment ist, und wobei die Steuereinrichtung die Werkzeugmaschine von dem ersten Betriebsmodus in den zweiten Betriebsmodus überführt, wenn das von der Einrichtung ermittelte Drehmoment das definierte Grenzdrehmoment überschreitet. Das ermittelte Drehmoment entspricht dabei dem von der Einrichtung ermittelten Parameter. Die Einrichtung kann als in der Steuereinrichtung hinterlegter Algorithmus ausgeführt sein, der anhand von Eingangsparametern, wie beispielsweise einer Motordrehzahl und einer aktuell vorliegenden Stromstärke das an der Abtriebswelle anliegende Drehmoment berechnet oder abschätzt.

Weiterhin kann es vorgesehen sein, dass die Einrichtung zur Ermittlung eines Beschleunigungswertes der Abtriebswelle ausgeführt ist, wobei die Werkzeugmaschine von dem ersten Betriebsmodus in den zweiten Betriebsmodus überführt wird, wenn der ermittelte Beschleunigungswert der Abtriebswelle einen definierten negativen Beschleunigungswert überschreitet und die Abtriebswelle somit stärker als ein definierter Wert abgebremst wird. Dieser Fall kann insbesondere dann auftreten, wenn beispielsweise ein Bohrer in einem harten Untergrund blockiert. Die ermittelte Beschleunigung entspricht dabei dem von der Einrichtung ermittelten Parameter.

Weiterhin kann es vorgesehen sein, dass der von der Einrichtung ermittelte Parameter eine Drehzahl der Antriebswelle ist, wobei die Werkzeugmaschine von dem ersten Betriebsmodus in den zweiten Betriebsmodus überführt wird, wenn eine Drehzahl einer Motorwelle oder der Abtriebswelle nach einer vorgegebenen Zeitspanne eine definierte Grenzdrehzahl nicht erreicht. Hierdurch kann insbesondere ermittelt werden, wenn beispielsweise ein mit der Abtriebswelle gekoppeltes Werkzeug bereits zu Beginn eines Bearbeitungsvorgangs in einem Untergrund blockiert ist.

Die oben genannte Aufgabe wird weiterhin mit einer Werkzeugmaschine gemäß des Patentanspruches 15 gelöst.

Es wird daher eine Werkzeugmaschine mit einem Akku, mit einem Elektromotor, der zum rotatorischen Antrieb einer mit einem Werkzeug koppelbaren Abtriebswelle ausgeführt ist, mit einer Steuereinrichtung zur Betätigung des Elektromotors und mit einer Einrichtung zur Ermittlung eines Parameters vorgeschlagen, wobei die Werkzeugmaschine mit einem oben näher beschriebenen Verfahren betrieben wird.

Eine erfindungsgemäße Werkzeugmaschine hat den Vorteil, dass mit ihr auf konstruktiv einfache, kostengünstige, gewichtsoptimierte und energieeffiziente Weise einem Nutzer eine vergleichbare haptische Rückmeldung wie bei einer Werkzeugmaschine mit einer mechanischen Kupplung für den Fall vermittelbar ist, dass ein an der Abtriebswelle anliegendes Bremsmoment größer als ein definiertes Grenzdrehmoment ist und die mechanische Kupplung auslöst.

Das energieeffiziente Betreiben der Werkzeugmaschine in dem zweiten Betriebszustand wird dadurch erreicht, dass eine maximale Höhe der Strompulse in Abhängigkeit des aktuellen Ladestatus des Akkus angepasst wird, so dass bei abnehmenden Ladezustand auch der Stromverbrauch reduziert wird und die Werkzeugmaschine somit vorteilhaft lange in dem zweiten Betriebsmodus betreibbar ist. Weiterhin kann sichergestellt werden, dass eine Spannung im Verlauf des Betreibens der Werkzeugmaschine in dem zweiten Betriebsmodus sicher oberhalb eines definierten Grenzwerts liegt.

Weitere Vorteile ergeben sich aus der folgenden Figurenbeschreibung. In den Figuren sind mehrere Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine stark vereinfachte Darstellung einer Werkzeugmaschine mit einem Akku, einem Elektromotor und einer Steuereinrichtung zur Betätigung des Elektromotors;
- Fig. 2: ein vereinfacht gezeigtes Ablaufdiagramm eines Verfahrens zum Betreiben der Werkzeugmaschine gemäß Fig. 1;
- Fig. 3: vereinfachte Diagramme, bei denen einerseits eine Drehzahl eines Elektromotors und andererseits eine Stromstärke, mit der der Elektromotor beaufschlagt wird, über einem Zeitablauf dargestellt sind, wobei die Diagramme den Betrieb der Werkzeugmaschine zunächst in einem ersten Betriebsmodus, anschließend in einem zweiten Betriebsmodus und schließlich wieder in dem ersten Betriebsmodus zeigen;
- Fig. 4: eine vereinfachte Ansicht eines Ausschnitts eines Stromstärkenprofils, auf das der Elektromotor in dem zweiten Betriebsmodus von einer Steuereinrichtung geregelt wird;
- Fig. 5: eine vereinfachte Ansicht eines Zusammenhangs eines Ladezustands eines Ackus der Werkzeugmaschine zu einer maximalen Stromstärke eines Strompulses eines Stromstärkenprofils; und
- Fig. 6: eine vereinfachte Ansicht eines Ausschnitts eines alternativen Stromstärkenprofils, auf das der Elektromotor in dem zweiten Betriebsmodus von einer Steuereinrichtung geregelt wird.

### Ausführungsbeispiele:

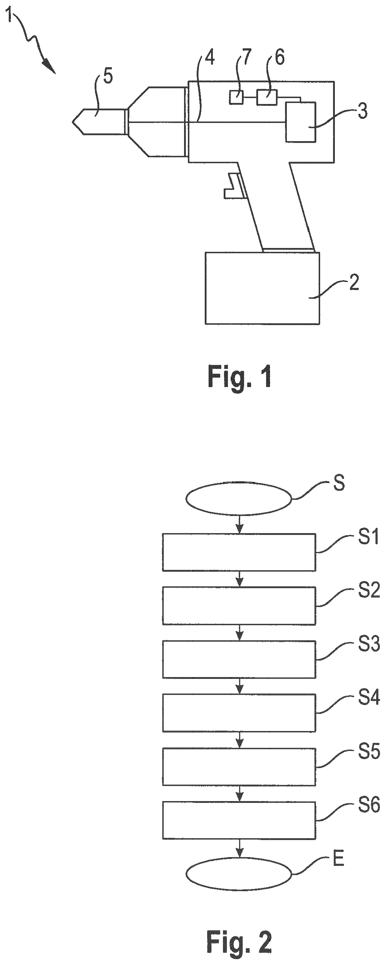

Fig. 1 zeigt ein exemplarisches Ablaufdiagramm einer Ausführungsform eines erfindungsgemäßen Verfahrens zum Betreiben einer Werkzeugmaschine 1, insbesondere einem Akkuschrauber, einer Bohrmaschine oder dergleichen. Die Werkzeugmaschine 1 weist einen Akku 2 auf, der zur Stromversorgung eines Elektromotors 3 der Werkzeugmaschine 1 vorgesehen ist. Der Elektromotor 3 ist zum rotatorischen Antrieb einer Abtriebswelle 4 der Werkzeugmaschine 1 ausgeführt, wobei die Abtriebswelle 4 mit einem Werkzeug 5, beispielsweise einem Bit, einem Bohrer oder dergleichen koppelbar ist. Die Werkzeugmaschine 1 weist weiterhin eine Steuereinrichtung 6 zur Betätigung des Elektromotors 3 auf, wobei die Steuereinrichtung 6 zur geregelten Betätigung des Elektromotors 3 anhand einer Stromstärke ausgeführt ist. Weiterhin weist die Werkzeugmaschine 1 eine Einrichtung 7 zur Ermittlung eines Parameters der Werkzeugmaschine 1, insbesondere eines an der Abtriebswelle 4 anliegenden Drehmoments und/oder eines Beschleunigungswertes der Abtriebswelle 4, auf. Die Werkzeugmaschine 1 ist ohne eine mechanische Kupplung ausgeführt, so dass der Elektromotor 3 direkt gegebenenfalls unter Zwischenschaltung eines Getriebes in Wirkverbindung mit der Abtriebswelle 4 steht.

Die Werkzeugmaschine 1 ist in einem ersten Betriebsmodus und in einem zweiten Betriebsmodus betreibbar. Im Folgenden wird hierauf näher eingegangen.

Das Verfahren beginnt mit dem Start S. In einem ersten Schritt S1 wird die Werkzeugmaschine 1 nach einer anwenderseitigen Anforderung in dem ersten Betriebsmodus, der beispielsweise einem normalen Bohrmodus entspricht, betrieben.

In einem zweiten Schritt S2 wird von der Einrichtung 7 ein definierter Betriebszustand detektiert, bei dem ein Weiterbetrieb in dem ersten Betriebsmodus beispielsweise zu einer Beschädigung des Elektromotors 3, insbesondere durch eine Überhitzung, führen kann. Hierbei wird von der Einrichtung 7 beispielsweise ein unerwünscht hohes an der Abtriebswelle 4 des Werkzeugs 5 anliegendes Bremsdrehmoment detektiert oder ermittelt, das einen vorgegebenen Schwellwert bzw. ein Grenzdrehmoment überschreitet. Dieser Fall kann beispielsweise bei der Bohrung eines Loches bei fortgeschrittener Bohrlochtiefe auftreten. Andererseits kann der definierte Betriebszustand von der Einrichtung 7 dadurch detektiert werden, dass der ermittelte Absolutwert der Beschleunigung der Abtriebswelle 4 größer einem definierten Schwellwert ist und das Werkzeug 5 somit eine definierte Abbremsung erfährt. Dieser Fall kann beispielsweise bei einem blockierenden Werkzeug 5 auftreten.

Die Einrichtung 7 kann beispielsweise als ein in der Steuereinrichtung 6 hinterlegter Algorithmus ausgeführt sein, der einen Parameter direkt oder indirekt aus anderen Eingangswerten ermittelt oder berechnet bzw. abschätzt und diesen mit einem definierten Grenzwert vergleicht. Der Parameter kann beispielsweise das an der Abtriebswelle 4 anliegende Drehmoment oder ein Beschleunigungswert der Abtriebswelle 4 sein.

Nach einer entsprechenden Detektion des definierten Betriebszustands wird der Elektromotor 3 von der Steuereinrichtung 6 im Schritt S3 auf eine Drehzahl nₘₒₜ im Wesentlichen gleich Null abgebremst.

Die Steuereinrichtung 6 überführt die Werkzeugmaschine 1 anschließend im Schritt S4 in den zweiten Betriebsmodus, der einerseits ein Lösen des Werkzeugs 5 und andererseits eine haptische Rückmeldung an den Anwender vergleichbar zu einer Werkzeugmaschine mit einer mechanischen Kupplung zum Ziel hat. Auf den zweiten Betriebsmodus wird im Folgenden näher eingegangen.

Nach insbesondere wieder gelöstem Werkzeug 5, d. h., wenn beispielsweise von der Einrichtung 7 detektiert wird, dass ein an der Abtriebswelle 4 anliegendes Drehmoment kleiner einem definierten Drehmomentwert ist, überführt die Steuereinrichtung 6 die Werkzeugmaschine 1 im Schritt S5 wieder in den ersten Betriebsmodus und es wird in Schritt S6 wiederum überprüft, ob erneut ein oben näher beschriebener definierter Betriebszustand auftritt.

Im Schritt E wird das Verfahren beispielsweise nach anwenderseitigem Wunsch beendet.

Fig. 2 zeigt einen exemplarischen Ablauf eines Bohrvorgangs, wobei in dem oberen Diagramm ein Verlauf der Motordrehzahl nₘₒₜ und in dem unteren Diagramm ein tatsächlicher Verlauf der Stromstärke A über der Zeit dargestellt ist. Der Stromstärkeverlauf entspricht dabei im Wesentlichen einem Verlauf eines an der Abtriebswelle 4 anliegenden Drehmoments.

Die Werkzeugmaschine 1 wird in einer ersten Phase P1 in dem ersten Betriebsmodus betrieben, wobei die Motordrehzahl nₘₒₜ dabei im Wesentlichen konstant einen Betriebswert nₘₒₜ₁ einnimmt und die zum Betrieb des Elektromotors 3 erforderliche Stromstärke A unterhalb eines Schwellwerts A_{grenz} liegt. Es kann auch vorgesehen sein, dass anstelle der Stromstärke A in der Steuereinrichtung 6 ein anliegendes Lastmoment geschätzt wird.

Zu einem Zeitpunkt t1 steigt die Stromstärke A bis zu dem Schwellwert A_{grenz} bzw. das geschätzte Lastmoment bis zu einem Schwellwert M_{grenz} an. Dies ist beispielsweise dadurch bedingt, dass das Werkzeug 5 tiefer in einen Untergrund eintritt und/oder das Werkzeug 5 blockiert und in einem Untergrund feststeckt. Von der Steuereinrichtung 6 wird hierbei der definierte Betriebszustand ermittelt. Um den Elektromotor 3 vor einer Überhitzung oder einer sonstigen Beschädigung zu schützen, wird die Motordrehzahl nₘₒₜ daraufhin in einer zweiten Phase P2 bis zum Zeitpunkt t2 im Wesentlichen auf den Wert Null eingestellt.

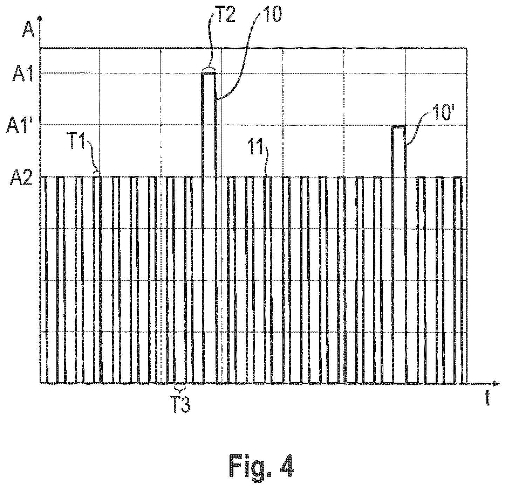

In der folgenden dritten Phase P3 wird die Werkzeugmaschine 1 von dem ersten Betriebsmodus in den zweiten Betriebsmodus überführt, in dem die Steuereinrichtung 6 den Elektromotor 3 mit einem vordefinierten und in Fig. 4 ausschnittsweise näher ersichtlichen Stromstärkeprofil beaufschlagt.

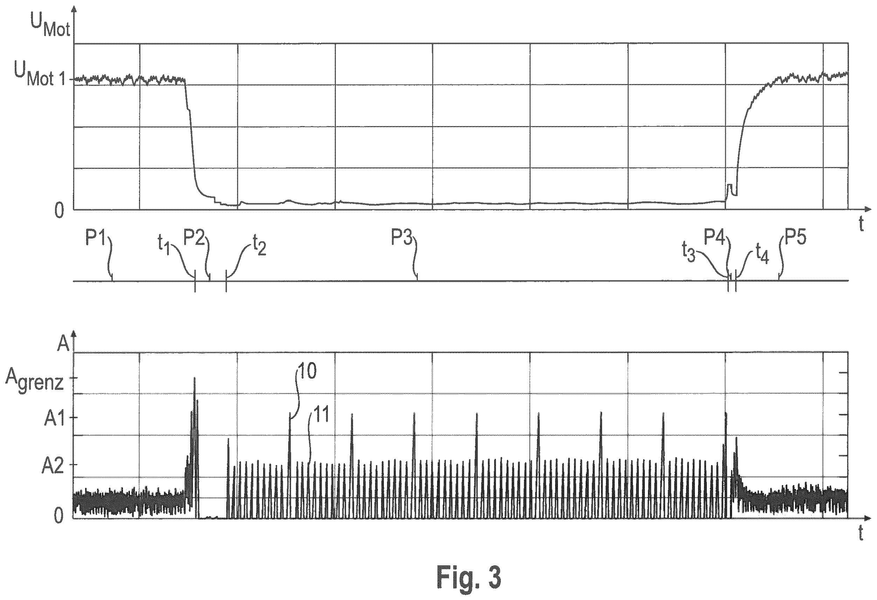

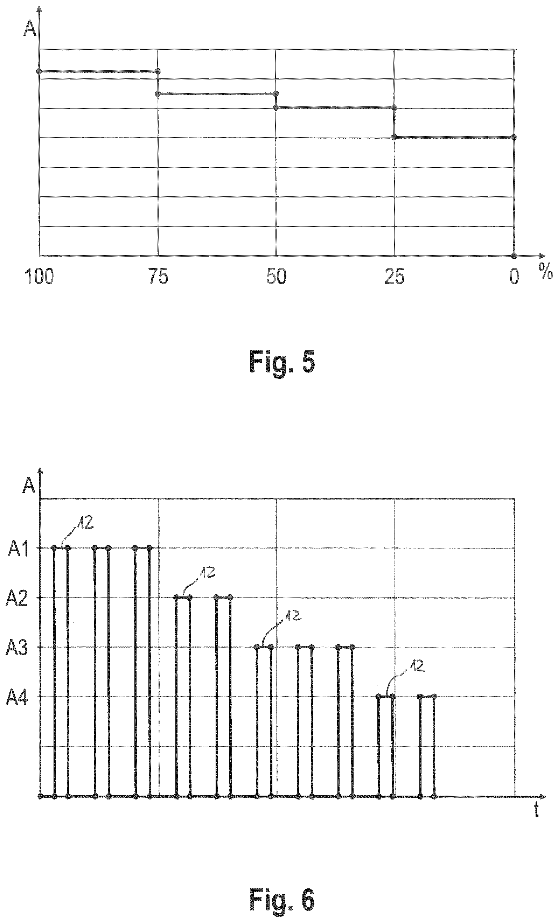

Der Elektromotor 3 wird von der Steuereinrichtung 6 in dem zweiten Betriebsmodus anhand des ausschnittsweise in Fig. 3 gezeigten Stromstärkeprofils angesteuert bzw. auf dieses Stromstärkeprofil geregelt. Das Stromstärkeprofil weist dabei erste Strompulse 10 und zweite Strompulse 11 auf, die vorliegend als Rechteckspulse ausgeführt sind. Die maximale Stromstärke A2 der zweiten Strompulse 11 ist dabei für alle ersten Strompulse 11 im Wesentlichen konstant, wobei die Stromstärke A2 vorliegend um etwa 50 % kleiner als eine maximale Stromstärke A1 des ersten Strompulses 10 ist. Der erste Strompuls 10 gemäß Fig. 4 weist eine maximale Stromstärke A1 bei vollem Ladezustand des Akkus 2 entspricht. Die maximale Stromstärke A1 des ersten Strompulses 10 nimmt in Abhängigkeit des Ladezustands des Akkus 2 ab, wobei ein weiterer erster Strompulse 10' eine maximale Stromstärke A1' kleiner der maximalen Stromstärke A1 aufweist, In Fig. 5 ist exemplarisch eine Abhängigkeit der maximalen Stromstärke der ersten Strompulse 10 von dem Ladezustand des Akkus 2 gezeigt, wobei die maximale Stromstärke der ersten Strompulse 10 bei abnehmendem Ladezustand des Akkus 2 vorliegend in diskreten Werten abnimmt. Der Ladezustand des Akkus 2 ist in Fig. 5 in prozentualer Abhängigkeit von einem maximalen Ladezustand des Akkus 2 dargestellt.

Es kann alternativ hierzu auch vorgesehen sein, dass die maximale Stromstärke der ersten Strompulse 10 bei Verfügbarkeit von zeitnaher oder aktueller Information bezüglich des Ladezustands des Akkus 2 im Wesentlichen kontinuierlich abnimmt.

Alternativ oder zusätzlich hierzu kann es auch vorgesehen sein, dass die maximale Stromstärke der zweiten Strompulse 11 in Abhängigkeit von dem Ladezustand des Akkus 2 abnimmt.

Die ersten Strompulse 10, 10' erstrecken sich über eine erste Zeitspanne T1, die vorliegend im Wesentlichen doppelt so lange wie eine Zeitspannte T2 der zweiten Strompulse 11 ist. Eine Zeitspanne T3 zwischen zwei aufeinanderfolgenden Strompulsen 10, 10' 11 entspricht vorliegend im Wesentlichen der Zeitspanne T1 des ersten Strompulses 10, 10'.

Bei dem Stromstärkeprofil folgen vorliegend auf einen ersten Strompulse 10, 10' neun zweite Strompulse 11. Es hat sich herausgestellt, dass hierdurch ein günstiger Kompromiss aus einer gewünschten haptischen Rückmeldung an den Anwender, die vergleichbar zu derjenigen einer Werkzeugmaschine mit auslösender mechanischer Kupplung ist, und einen niedrigen Stromverbrauch zur Folge hat. Insbesondere durch die ersten Strompulse 10, 10' wird dabei ein Drehmoment auf die Abtriebswelle 4 aufgebracht, das das Werkzeug 5 aus der blockierten Situation lösen soll.

Zu einem Zeitpunkt t3 in den Diagrammen gemäß Fig. 3 steigt die Motordrehzahl nₘₒₜ bis zum Zeitpunkt t4 in einer vierten Phase P4 an, wobei dies auf die Aufhebung der Blockadesituation des Werkzeugs zurückzuführen ist. Daraufhin wird die Werkzeugmaschine 1 von der Steuereinrichtung 6 ab dem Zeitpunkt t4 in einer fünften Phase P5 zurück in den ersten Betriebszustand geführt, wobei die Motordrehzahl nₘₒₜ nach einer Beschleunigungsphase zurück auf den Wert nₘₒₜ₁ geführt wird.

Sollte alternativ hierzu der Betrieb der Werkzeugmaschine 1 über einen definierten Zeitraum nicht zu einem Lösen einer Blockade des Werkzeugs 5 führen, kann es vorgesehen sein, dass zur Verhinderung einer Überhitzung des Elektromotors 3 der Elektromotor 3 gestoppt wird.

In Fig. 6 ist ein alternativ ausgeführtes Stromstärkeprofil gezeigt, welches im Unterschied zu dem Stromstärkeprofil gemäß Fig. 4 keine zwei grundsätzlich voneinander abweichende Arten von Strompulsen aufweist, sondern lediglich eine Art von Strompulsen 12 vorsieht. Die Strompulse 12 unterscheiden sich vorliegend lediglich durch die Höhe der maximalen Stromstärke voneinander, wobei diese in oben beschriebener Art und Weise abhängig von dem Ladezustand des Akkus 2 ist und im zeitlichen Verlauf vorliegend von einem Wert A1 bis zu einem Wert A4 abnimmt. Die maximale Stromstärke der ersten Strompulse 10 nimmt bei abnehmendem Ladezustand des Akkus 2 vorliegend in diskreten Werten ab.

Alternativ hierzu kann es auch vorgesehen sein, dass einzelne oder mehrere Strompulse 12 des Stromstärkeprofils sich über eine längere Zeitspanne als andere Strompulse 12 erstrecken, so dass die einen größeren Stromverbrauch nach sich ziehenden längeren Strompulse zum Aufbringen eines gewünscht hohen Abtriebsdrehmoments auf die Abtriebswelle 4 und die weiteren Strompulse zur Erzielung einer gewünschten haptischen Rückmeldung vergleichbar einer ausgelösten mechanischen Kupplung ist.

Es kann alternativ hierzu auch vorgesehen sein, dass die maximale Stromstärke der ersten Strompulse 10, 10' bzw. der Strompulse 12 bei Verfügbarkeit von zeitnaher oder aktueller Information bezüglich des Ladezustands des Akkus 2 im Wesentlichen kontinuierlich abnimmt.

### Bezugszeichenliste

- 1: Werkzeugmaschine
- 2: Akku
- 3: Elektromotor
- 4: Abtriebswelle
- 5: Werkzeug
- 6: Steuereinrichtung
- 7: Einrichtung
- 10, 10': erster Strompuls
- 11: zweiter Strompuls
- 12: Strompuls
- A_{grenz}: Schwellwert
- A1, A1', A2, A3, A4: maximale Stromstärke
- nₘₒₜ: Motordrehzahl
- nₘₒₜ₁: Betriebswert der Motordrehzahl
- E, S, S1 - S6: Verfahrensschritt
- P1 - P4: Phase
- T1, T2, T3: Zeitspanne
- t1 bis t5: Zeitpunkt

## Patentansprüche

1. Verfahren zum Betreiben einer Werkzeugmaschine (1) mit einem Akku (2) und einem Elektromotor (3), der zum rotatorischen Antrieb einer mit einem Werkzeug (5) koppelbaren Abtriebswelle (4) ausgeführt ist, wobei eine Steuereinrichtung (6) zur Betätigung des Elektromotors (3) und eine Einrichtung (7) zur Ermittlung eines Parameters vorgesehen ist, wobei die Werkzeugmaschine (1) in einem ersten Betriebsmodus und einem zweiten Betriebsmodus betreibbar ist, und wobei die Steuereinrichtung (6) die Werkzeugmaschine (1) von dem ersten Betriebsmodus in den zweiten Betriebsmodus überführt, wenn der von der Einrichtung (7) ermittelte Parameter einen definierten Schwellwert überschreitet oder unterschreitet, wobei der Elektromotor (3) in dem zweiten Betriebsmodus mit einem Strompulse (10, 10', 11, 12) umfassenden Stromstärkeprofil angesteuert wird, **dadurch gekennzeichnet, dass** eine Höhe einer maximalen Stromstärke (A1, A1', A2, A3, A4) der Strompulse (10, 10', 11, 12) in Abhängigkeit eines aktuellen Ladestatus des Akkus (2) variiert wird.

2. Verfahren nach Anspruch 1,
**dadurch gekennzeichnet,**
**dass** eine Höhe der maximalen Stromstärke (A1, A1', A2, A3, A4) von Strompulsen (10, 10', 11, 12), mit denen der Elektromotor (3) in dem zweiten Betriebsmodus beaufschlagt wird, im zeitlichen Ablauf nicht zunimmt und insbesondere abnimmt.

3. Verfahren nach einem der Ansprüche 1 oder 2,
**dadurch gekennzeichnet,**
**dass** eine Höhe der maximalen Stromstärke (A1, A1', A2, A3, A4) der Strompulse (10, 10', 11, 12) diskret oder kontinuierlich in Abhängigkeit des Ladestatus des Akkus (2) angepasst werden.

4. Verfahren nach einem der vorhergehenden Ansprüche,
**dadurch gekennzeichnet,**
**dass** der Elektromotor (3) in dem zweiten Betriebsmodus mit ersten Strompulsen (10, 10') und zweiten Strompulsen (11) beaufschlagt wird, wobei die Höhe einer maximalen Stromstärke (A1, A1') der ersten Strompulse (10, 10') größer als die Höhe einer maximalen Stromstärke (A2) der zweiten Strompulse (11) ist.

5. Verfahren nach Anspruch 4,
**dadurch gekennzeichnet,**
**dass** der Elektromotor (3) in dem zweiten Betriebsmodus abwechselnd mit einer definierten Anzahl erster Strompulse (10, 10') und einer definierten Anzahl zweiter Strompulse (11) angesteuert wird.

6. Verfahren nach einem der Ansprüche 4 oder 5,
**dadurch gekennzeichnet,**
**dass** der Elektromotor (3) in dem zweiten Betriebsmodus abwechselnd mit einem ersten Strompuls (10, 10') und anschließend mehreren, insbesondere zwei bis zwanzig, vorzugsweise fünf bis 14, vorzugsweise acht bis zehn, zweiten Strompulsen (11) angesteuert wird.

7. Verfahren nach einem der Ansprüche 4 bis 6,
**dadurch gekennzeichnet,**
**dass** der Elektromotor (3) in dem zweiten Betriebsmodus derart angesteuert wird, dass eine Länge der ersten Strompulse (10, 10') sich von einer Länge der zweiten Strompulse (11) unterscheidet, wobei die ersten Strompulse (10, 10') insbesondere länger als die zweiten Strompulse (11) sind, und vorzugsweise im Wesentlichen doppelt so lange wie die zweiten Strompulse (11) sind.

8. Verfahren nach einem der vorhergehenden Ansprüche,
**dadurch gekennzeichnet,**
**dass** der Elektromotor (3) in dem zweiten Betriebsmodus derart angesteuert wird, dass eine Höhe der maximalen Stromstärke (A1, A1') der ersten Strompulse (10, 10') zwischen 25 % und 80 % größer, besonders bevorzugt im Wesentlichen 50 % größer als die maximale Stromstärke (A2) der zweiten Strompulse (11) ist.

9. Verfahren nach einem der vorhergehenden Ansprüche,
**dadurch gekennzeichnet,**
**dass** der Elektromotor (3) ausgehend von einem ersten Betriebsmodus der Werkzeugmaschine (1) vor einem Übergang in den zweiten Betriebsmodus für eine definierte Zeitspanne mit einer Stromstärke im Wesentlichen gleich dem Wert Null beaufschlagt wird.

10. Verfahren nach einem der vorhergehenden Ansprüche,
**dadurch gekennzeichnet,**
**dass** die Werkzeugmaschine (1) von dem zweiten Betriebsmodus in den ersten Betriebsmodus überführt wird, wenn ein von der Einrichtung (7) ermitteltes, an der Abtriebswelle (4) anliegendes Drehmoment kleiner als ein Grenzdrehmoment wird.

11. Verfahren nach einem der Ansprüche 1 bis 9,
**dadurch gekennzeichnet,**
**dass** der Elektromotor (3) gestoppt wird, wenn sich die Werkzeugmaschine (1) über einen Zeitraum größer einem vordefinierten Grenzwert in dem zweiten Betriebsmodus befindet.

12. Verfahren nach einem der vorhergehenden Ansprüche,
**dadurch gekennzeichnet,**
**dass** der von der Einrichtung (7) ermittelte Parameter ein an der Abtriebswelle (4) anliegendes Drehmoments ist, wobei die Werkzeugmaschine in dem ersten Betriebsmodus betrieben wird, wenn das von der Einrichtung (7) ermittelte Drehmoment kleiner als ein definiertes Grenzdrehmoment ist, und wobei die Werkzeugmaschine (1) von dem ersten Betriebsmodus in den zweiten Betriebsmodus überführt wird, wenn das von der Einrichtung (7) ermittelte Drehmoment das definierte Grenzdrehmoment überschreitet.

13. Verfahren nach einem der vorhergehenden Ansprüche,
**dadurch gekennzeichnet,**
**dass** der von der Einrichtung (7) ermittelte Parameter ein Beschleunigungswert der Abtriebswelle (4) ist, wobei die Werkzeugmaschine (1) von dem ersten Betriebsmodus in den zweiten Betriebsmodus überführt wird, wenn die ermittelte Beschleunigung einen definierten negative Beschleunigungswert überschreitet.

14. Verfahren nach einem der vorhergehenden Ansprüche,
**dadurch gekennzeichnet,**
**dass** der von der Einrichtung (7) ermittelte Parameter eine Drehzahl der Antriebswelle (4) ist, wobei die Werkzeugmaschine (1) von dem ersten Betriebsmodus in den zweiten Betriebsmodus überführt wird, wenn eine Drehzahl nach einer vorgegebenen Zeitspanne eine definierte Grenzdrehzahl nicht erreicht.

15. Werkzeugmaschine (1) mit einem Akku (2), mit einem Elektromotor (3), der zum rotatorischen Antrieb einer mit einem Werkzeug (5) koppelbaren Abtriebswelle (4) ausgeführt ist, mit einer Steuereinrichtung (6) zur Betätigung des Elektromotors (3) und mit einer Einrichtung (7) zur Ermittlung eines Parameters, **dadurch gekennzeichnet, dass** die Steuereinrichtung (6) dazu vorgesehen ist, die Werkzeugmaschine (1) mit einem Verfahren gemäß einem der vorhergehenden Ansprüche zu betreiben.

## Claims

1. Method for operating a machine tool (1) having a battery (2) and an electric motor (3) which is designed to rotationally drive an output shaft (4) that can be coupled to a tool (5), a control device (6) for actuating the electric motor (3) and a device (7) for determining a parameter being provided, it being possible for the machine tool (1) to be operated in a first operating mode and a second operating mode, and the control device (6) transferring the machine tool (1) from the first operating mode into the second operating mode if the parameter determined by the device (7) exceeds or falls below a defined threshold value,
the electric motor (3) being controlled in the second operating mode by an amperage profile comprising a current pulse (10, 10', 11, 12),
**characterized in that**
a level of a maximum current amperage (A1, A1', A2, A3, A4) of the current pulses (10, 10', 11, 12) is varied depending on a current charge status of the battery (2).

2. Method according to claim 1,
**characterized in that**
a level of the maximum amperage (A1, A1', A2, A3, A4) of current pulses (10, 10', 11, 12) applied to the electric motor (3) in the second operating mode does not increase over time, and in particular decreases.

3. Method according to either claim 1 or claim 2,
**characterized in that**
a level of the maximum amperage (A1, A1', A2, A3, A4) of the current pulses (10, 10', 11, 12) can be adjusted discretely or continuously depending on the charge status of the battery (2).

4. Method according to any of the preceding claims,
**characterized in that**
first current pulses (10, 10') and second current pulses (11) are applied to the electric motor (3) in the second operating mode, the level of a maximum amperage (A1, A1') of the first current pulses (10, 10') being greater than the level of a maximum amperage (A2) of the second current pulses (11).

5. Method according to claim 4,
**characterized in that**
the electric motor (3) is controlled in the second operating mode alternately by a defined number of first current pulses (10, 10') and a defined number of second current pulses (11).

6. Method according to either claim 4 or claim 5,
**characterized in that**
the electric motor (3) is controlled in the second operating mode alternately by a first current pulse (10, 10') and then a plurality of second current pulses (11), in particular two to twenty, preferably five to fourteen, more preferably eight to ten second current pulses.

7. Method according to any of claims 4 to 6,
**characterized in that**
the electric motor (3) is controlled in the second operating mode such that a length of the first current pulses (10, 10') differs from a length of the second current pulses (11), the first current pulses (10, 10') being in particular longer than the second current pulses (11), and preferably being substantially twice as long as the second current pulses (11).

8. Method according to any of the preceding claims,
**characterized in that**
the electric motor (3) is controlled in the second operating mode such that a level of the maximum amperage (A1, A1') of the first current pulses (10, 10') is between 25% and 80% larger, particularly preferably substantially 50% larger than the maximum amperage (A2) of the second current pulses (11).

9. Method according to any of the preceding claims,
**characterized in that**
proceeding from a first operating mode of the machine tool (1), an amperage substantially equal to the value zero is applied to the electric motor (3) for a defined period of time before a transition into the second operating mode.

10. Method according to any of the preceding claims,
**characterized in that**
the machine tool (1) is transferred from the second operating mode into the first operating mode when a torque which is determined by the device (7) and applied to the output shaft (4) becomes less than a threshold torque.

11. Method according to any of claims 1 to 9,
**characterized in that**
the electric motor (3) is stopped when the machine tool (1) is in the second operating mode over a period of time greater than a predefined threshold value.

12. Method according to any of the preceding claims,
**characterized in that**
the parameter determined by the device (7) is a torque applied to the output shaft (4), the machine tool being operated in the first operating mode when the torque determined by the device (7) is less than a defined threshold torque, and the machine tool (1) being transferred from the first operating mode into the second operating mode when the torque determined by the device (7) exceeds the defined threshold torque.

13. Method according to any of the preceding claims,
**characterized in that**
the parameter determined by the device (7) is an acceleration value of the output shaft (4), the machine tool (1) being transferred from the first operating mode into the second operating mode when the determined acceleration exceeds a defined negative acceleration value.

14. Method according to any of the preceding claims,
**characterized in that**
the parameter determined by the device (7) is a speed of the drive shaft (4), the machine tool (1) being transferred from the first operating mode into the second operating mode if a speed does not reach a defined threshold speed after a specified period of time.

15. Machine tool (1) having a battery (2), an electric motor (3) which is designed to rotationally drive an output shaft (4) that can be coupled to a tool (5), a control device (6) for actuating the electric motor (3), and a device (7) for determining a parameter, **characterized in that** the control device (6) is provided so as to operate the machine tool (1) using a method according to any of the preceding claims.

## Revendications

1. Procédé pour faire fonctionner une machine-outil (1) comportant une batterie (2) et un électromoteur (3) destiné à entraîner en rotation un arbre de sortie (4) pouvant être accouplé à un outil (5), dans lequel un dispositif de commande (6) destiné à actionner l'électromoteur (3) est prévu et un dispositif (7) destiné à déterminer un paramètre est prévu, dans lequel la machine-outil (1) peut être mise en fonctionnement dans un premier mode de fonctionnement et dans un second mode de fonctionnement, et dans lequel le dispositif de commande (6) amène la machine-outil (1) d'un premier mode de fonctionnement à un second mode de fonctionnement lorsque le paramètre déterminé par le dispositif (7) dépasse une valeur de seuil définie ou passe en dessous de celle-ci,
dans lequel l'électromoteur (3) est commandé dans le second mode de fonctionnement avec un profil d'intensité de courant comprenant des impulsions de courant (10, 10', 11, 12),
**caractérisé en ce**
**qu**'une valeur d'une intensité de courant (A1, A1', A2, A3, A4) maximale des impulsions de courant (10, 10', 11, 12) varie en fonction de l'état de charge actuel de la batterie (2).

2. Procédé selon la revendication 1,
**caractérisé en ce**
**qu**'une valeur de l'intensité de courant (A1, A1', A2, A3, A4) maximale d'impulsions de courant (10, 10', 11, 12), par lesquelles l'électromoteur (3) est alimenté dans le second mode de fonctionnement, n'augmente pas dans le temps, et diminue notamment.

3. Procédé selon l'une des revendications 1 ou 2,
**caractérisé en ce**
**qu**'une valeur d'une intensité de courant (A1, A1', A2, A3, A4) maximale des impulsions de courant (10, 10', 11, 12) est ajustée discrètement ou en continu en fonction de l'état de charge de la batterie (2).

4. Procédé selon l'une des revendications précédentes,
**caractérisé en ce**
**que** l'électromoteur (3) est alimenté dans le second mode de fonctionnement par de premières impulsions de courant (10, 10') et de secondes impulsions de courant (11), la valeur d'une intensité de courant (A1, A1') des premières impulsions de courant (10, 10') étant supérieure à la valeur d'une intensité de courant (A2) maximale des secondes impulsions de courant (11).

5. Procédé selon la revendication 4,
**caractérisé en ce**
**que** l'électromoteur (3) est commandé, dans le second mode de fonctionnement, alternativement avec un nombre défini de premières impulsions de courant (10, 10') et un second nombre défini de secondes impulsions de courant (11).

6. Procédé selon l'une des revendications 4 ou 5,
**caractérisé en ce**
**que** l'électromoteur (3) est commandé, dans le second mode de fonctionnement, alternativement avec une première impulsion de courant (10, 10') puis avec plusieurs, notamment deux à vingt, de préférence cinq à 14, de préférence huit à dix secondes impulsions de courant (11).

7. Procédé selon l'une des revendications 4 à 6,
**caractérisé en ce**
**que** l'électromoteur (3), dans le second mode de fonctionnement, est commandé de sorte qu'une longueur des premières impulsions de courant (10, 10') diffère d'une longueur des secondes impulsions de courant (11), les premières impulsions de courant (10, 10') étant particulièrement plus longues que les secondes impulsions de courant (11), et étant de préférence sensiblement deux fois plus longues que les secondes impulsions de courant (11).

8. Procédé selon l'une des revendications précédentes,
**caractérisé en ce**
**que** l'électromoteur (3), dans le second mode de fonctionnement, est commandé de sorte qu'une valeur de l'intensité de courant (A1, A1') maximale des premières impulsions de courant (10, 10') est entre 25 et 80 % supérieure, de manière particulièrement préférée sensiblement 50 % supérieure à l'intensité de courant (A2) maximale des secondes impulsions de courant (11).

9. Procédé selon l'une des revendications précédentes,
**caractérisé en ce**
**que** l'électromoteur (3), à partir d'un premier mode de fonctionnement de la machine-outil (1) avant un passage au second mode de fonctionnement, est alimenté par une intensité de courant sensiblement égale à zéro pendant une période de temps définie.

10. Procédé selon l'une des revendications précédentes,
**caractérisé en ce**
**que** la machine-outil (1) est amenée du second mode de fonctionnement au premier mode de fonctionnement lorsqu'un couple déterminé par le dispositif (7) et appliqué à l'arbre de sortie (4) est inférieur à un couple limite.

11. Procédé selon l'une des revendications 1 à 9,
**caractérisé en ce**
**que** l'électromoteur (3) est arrêté lorsque la machine-outil (1) se trouve dans le second mode de fonctionnement pendant une période supérieure à une valeur limite prédéfinie.

12. Procédé selon l'une des revendications précédentes,
**caractérisé en ce**
**que** le paramètre déterminé par le dispositif (7) est un couple appliqué à l'arbre de sortie (4), dans lequel la machine-outil fonctionne dans le premier mode de fonctionnement lorsque le couple déterminé par le dispositif (7) est inférieur à un couple limite défini, et dans lequel le machine-outil (1) est amenée du premier mode de fonctionnement au second mode de fonctionnement lorsque le couple déterminé par le dispositif (7) dépasse le couple limite défini.

13. Procédé selon l'une des revendications précédentes,
**caractérisé en ce**
**que** le paramètre déterminé par le dispositif (7) est une valeur d'accélération de l'arbre de sortie (4), dans lequel la machine-outil (1) est amenée du premier mode de fonctionnement au second mode de fonctionnement lorsque l'accélération déterminée dépasse une valeur d'accélération négative définie.

14. Procédé selon l'une des revendications précédentes,
**caractérisé en ce**
**que** le paramètre déterminé par le dispositif (7) est une vitesse de rotation de l'arbre de sortie (4), dans lequel la machine-outil (1) est amenée du premier mode de fonctionnement au second mode de fonctionnement lorsqu'une vitesse de rotation n'atteint pas une vitesse de rotation limite après une période de temps prédéfinie.

15. Machine-outil (1) comportant une batterie (2), comportant un électromoteur (3) destiné à entraîner en rotation un arbre de sortie (4) pouvant être accouplé à un outil (5), comportant un dispositif de commande (6) destiné à actionner l'électromoteur (3) et comportant un dispositif (7) destiné à déterminer un paramètre, **caractérisée en ce que** le dispositif de commande (6) est prévu pour faire fonctionner la machine-outil (1) avec un procédé selon l'une des revendications précédentes.
